# EUROPÄISCHE PATENTSCHRIFT

(11) **EP 0 936 366 B1**
(45) Veröffentlichungstag und Bekanntmachung des Hinweises auf die Patenterteilung: **21.11.2001**
(21) Anmeldenummer: 99100613.1
(22) Anmeldetag: 14.01.1999
(51) Int. Cl.: F16C 29/10, B23Q 1/28

(54) **Bremsvorrichtung für eine Linearführung**
Breaking device for a linear guide
Frein pour guidage linéaire

(30) Priorität: 11.02.1998 DE 19805449
(43) Veröffentlichungstag der Anmeldung: 18.08.1999
(73) Patentinhaber: INA Wälzlager Schaeffler oHG, 91072 Herzogenaurach (DE)
(72) Erfinder: Rudy, Dietmar, 67655 Kaiserslautern (DE)

(56) Entgegenhaltungen:
- DE-A- 4 304 950
- DE-C- 726 570
- DE-U- 29 613 345
- US-A- 3 741 349
- US-A- 4 658 669
- US-A- 5 460 452
- US-A- 5 678 663
- PATENT ABSTRACTS OF JAPAN vol. 011, no. 125 (M-582), 18. April 1987 (1987-04-18) & JP 61 266825 A (HIROSHI TERAMACHI), 26. November 1986 (1986-11-26)

## Beschreibung

### Gebiet der Erfindung

Die Erfindung betrifft eine Bremsvorrichtung für eine Linearführung mit einem längs einer Führungsschiene verfahrbaren Tragkörper, welcher auf die beiden Längsseiten der Führungsschiene einwirkende Bremsbacken enthält.

### Hintergrund der Erfindung

Eine solche Bremsvorrichtung mit einem Keilschieber, der eine gegenüber der Längsrichtung der Führungsschiene geneigte Keilfläche und längs dieser gelagerte Wälzkörper aufweist, über welche er eine Klemmkraft auf eine der Bremsbacken ausübt, wobei er in einer Verschieberichtung von einem Engeriespeicher beaufschlagt ist, und mit einem Arbeitskolben, der in einem Druckraum des Tragkörpers zur Längsachse der Führungsschiene parallel verschiebbar angeordnet und in der anderen Verschieberichtung des Keilschiebers von einem hydraulischen oder pneumatischen Druckmittel zum Aufheben der Klemmkraft an den Energiespeicher andrückbar ist, ist aus dem Dokument DE 296 13 345 U1 bekannt. Sie ist dort jeweils an einer Längsseite der Führungsschiene in dem Tragkörper angeordnet, so daß dieser insgesamt zwei Bremsvorrichtungen mit zwei einander gegenüberliegenden und einander entgegenwirkenden Bremsbacken benötigt. Dementsprechend sind in dem Tragkörper Leitungen für ein pneumatisches Druckmittel vorgesehen, die die beiden dort einander gegenüberliegend angeordneten Bremsvorrichtung miteinander verbinden. Damit ergibt sich eine konstruktiv aufwendige Bauweise des mit den Bremsvorrichtungen versehenen Tragkörpers.

### Zusammenfassung der Erfindung

Der Erfindung liegt die Aufgabe zugrunde, eine Linearführung mit nur einer Bremsvorrichtung zu versehen, die einen einfachen Aufbau aufweist und eine gleichmäßige Beaufschlagung beider Längsseiten der Führungsschiene mit Bremsbacken ermöglicht.

Diese Aufgabe wird erfindungsgemäß gemäß der Ansprüche 1 bis 3 dadurch gelöst, daß der Tragkörper im Querschnitt H-förmig ausgebildet ist, einen dünnen, elastisch biegsamen Steg und zwei untere Schenkel aufweist, mit welchen er die Führungsschiene umgreift, wobei jeweils zwischen einem unteren Schenkel und der Führungsschiene eine Bremsbacke angeordnet ist, und daß der Tragkörper mit zwei oberen Schenkeln versehen ist, die gemeinsam mit dem Steg einen Aufnahmeraum bilden, in welchem ein Keilschieber, ein elektromechanischer Kraftwandler oder ein verstellbarer Kniehebel angeordnet ist. Eine solche Bremsvorrichtung ist in einem Wälzführungssystem integrierbar, so daß kein zusätzlicher Bauraum benötigt wird. Sie ermöglicht eine sicherheitsgerechte Ansteuerung des Systems, die bei Energieausfall automatisch eine Bremsung und Festklemmung des Tragkörpers an der Führungsschiene bewirkt. Die mechanische Bremsmöglichkeit ist insbesondere bei Lineardirektantrieben erforderlich, um zum einen den notwendigen Personenschutz im Einrichtbetrieb und außerdem den Maschinenschutz in Havariesituationen zu gewährleisten.

Der Keilschieber ist an seinen beiden Längsseiten mit zwei zur mittleren Längsebene der Führungsschiene symmetrischen geneigten Keilflächen versehen, die sich über die Wälzkörper an entsprechend geneigten inneren Oberflächen der oberen Schenkel abstützen.

Die auf den Keilschieber in Längsrichtung der Führungsschiene einwirkende, durch den Energiespeicher erzeugte Kraft verstärkt sich durch den Keileffekt um ein Vielfaches und wirkt so gegen die oberen Schenkel des Tragkörpers. Sie drückt diese auseinander und durch den elastischen Steg, welcher einen mechanischen Drehpunkt darstellt, werden die unteren Schenkel entsprechend zusammengepreßt und somit die Bremsbacken gegen die Führungsschiene gedrückt. Zwischen den unteren Schenkeln des Tragkörpers und den Bremsbacken können Keilstücke angeordnet sein, welche zur mechanischen Verschleißkorrektur dienen.

Der Energiespeicher kann als mechanischer Energiespeicher in der Form von Tellerfedern oder Schraubenfedern ausgebildet sein. Es ist aber auch möglich, den Energiespeicher als Gasdruckfeder auszubilden.

In dem Keilschieber können Bohrungen zur Aufnahme des Energiespeichers angeordnet sein, welche zur Längsachse der Führungsschiene parallel verlaufen. Es ist möglich, den Keilschieber und den Druckkolben aus einem leichten Werkstoff wie Keramik herzustellen.

Der H-förmige Tragkörper kann von einem die Anbindung an einer Anschlußkonstruktion ermöglichenden Blechrahmen umgeben sein. Die inneren Oberflächen der unteren Schenkel sind jeweils gegenüber der mittleren Längsebene der Führungsschiene geneigt ausgebildet, wobei zwischen jeder Bremsbacke und dem benachbarten unteren Schenkel ein Keilstück angeordnet ist, welches in Schienenlängsrichtung von einer Druckfeder beaufschlagt ist. Auf diese Weise wird Verschleiß der Bremsbacke jeweils über das in Längsrichtung angeordnete Keilstück ausgeglichen. Entsprechend dem zwischen der Bremsbacke und dem unteren Schenkel des Tragkörpers angeordneten Keilstück verfügt der untere Schenkel ebenfalls über eine schräge Fläche in Längsrichtung. Dabei wird das Keilstück mit einer Federkraft in Längsrichtung beaufschlagt, so daß es im gelüfteten Zustand der Bremse so lange in Längsrichtung verschoben wird, bis es sich an der Bremsbacke und an dem unteren Schenkel abstützt, wenn die Bremsbacke an der Führungsschiene anliegt.

### Kurze Beschreibung der Zeichnungen

Ausführungsbeispiele der Erfindung sind in der Zeichnung dargestellt und werden im folgenden näher beschrieben. Es zeigen:
- Figur 1: eine Linearführung mit einer Bremsvorrichtung im Querschnitt gemäß Linie 1-1 der Figur 2;
- Figur 2: eine Draufsicht auf die Linearführung gemäß Figur 1;
- Figur 3: einen Längsschnitt durch die Linearführung gemäß Linie III-III der Figur 1;
- Figur 4: einen Querschnitt durch eine abgewandelte Linearführung mit einer Bremsvorrichtung;
- Figur 5: eine Draufsicht auf eine weitere abgewandelte Linearführung mit einer Bremsvorrichtung.

### Ausführliche Beschreibung der Zeichnungen

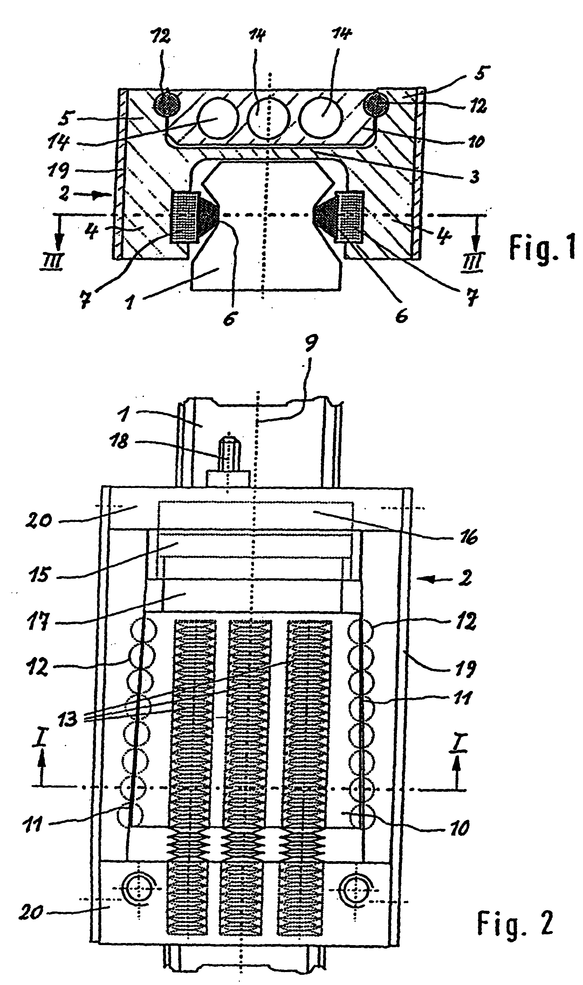

Die erfindungsgemäße Linearführung mit der Bremsvorrichtung nach den Figuren 1 bis 3 enthält einen längs einer Führungsschiene 1 verschiebbaren Tragkörper 2. Dieser ist im Querschnitt H-förmig ausgebildet und weist einen dünnen elastischen Steg 3, zwei zu beiden Seiten der Führungsschiene angeordnete untere Schenkel 4 und zwei entsprechend der H-Form sich an dem Steg 3 und den unteren Schenkeln anschließende obere Schenkel 5 auf. Zwischen den unteren Schenkeln 4 und der Führungsschiene 1 erstrecken sich in Längsrichtung der Führungsschiene zwei Bremsbacken 6 und zwischen jeder Bremsbacke 6 und dem zugehörigen unteren Schenkel 4 ist ein Keilstück 7 angeordnet, das an seinem breiteren Ende von einer Druckfeder 8 beaufschlagt ist. Entsprechend der Form des Keilstücks 7 ist auch die innere Oberfläche jedes unteren Schenkels 4 gegenüber der Längsachse 9 der Führungsschiene geneigt ausgebildet.

Die beiden oberen Schenkel 5 des Tragkörpers 2 bilden mit dem Steg 3 einen Aufnahmeraum für einen Keilschieber 10. Dieser weist zu der durch die Längsachse 9 verlaufenden mittleren Ebene symmetrische seitliche Keilflächen 11 auf, die Laufbahnen für Wälzkörper 12 bilden. Die hier als Kugeln ausgebildeten Wälzkörper 12 haben außerdem Laufbahnen an den ebenfalls gegenüber der Längsachse 9 geneigt ausgebildeten inneren Oberflächen der oberen Schenkel 5. Die Neigungen dieser Oberflächen entsprechen den Neigungen der benachbarten Keilflächen 11. Bei einer Verschiebung des Keilschiebers 10 innerhalb des Tragkörpers 2 in der einen Führungsschienenlängsrichtung werden die oberen Schenkel 5 von den an den Keilflächen 11 entlangrollenden Wälzkörpern 2 auseinandergedrückt, wobei der Steg 3 sich elastisch verformt. Bei dieser Bewegung werden die unteren Schenkel 4 gezwungen, sich zu den Längsseiten der Führungsschiene 1 hin zu bewegen und über die Keilstücke 7 und die Bremsbacken 6 eine Klemmkraft auf die Führungsschiene 1 auszuüben. Die Bewegung des Keilschiebers 10 innerhalb des Tragkörpers 2 in der anderen Führungsschienenlängsrichtung bewirkt ein Lösen der Bremsbacken 6 von den Längsseiten der Führungsschiene 1.

Die Bewegung des Keilschiebers 10 in Klemmrichtung wird von Tellerfedern 13 hervorgerufen, die in zur Längsachse 9 der Führungsschiene 1 parallelen Bohrungen 14 des Keilschiebers 10 angeordnet sind. Sie stützen sich jeweils mit einem Ende in dem Tragkörper 2 und mit dem anderen Ende in dem Keilschieber 10 ab.

Der auf diese Weise an der Führungsschiene 1 festgeklemmte Tragkörper 2 kann mit Hilfe eines Arbeitskolbens 15 gelöst werden. Dieser ist innerhalb des Tragkörpers 2 in einem Druckraum 16 parallel zur Längsachse 9 der Führungsschiene 1 verschiebbar angeordnet. Er wirkt mit einer Stirnseite über ein Druckstück 17 auf den Keilschieber 10, wenn auf seine andere Stirnseite innerhalb des Druckraums 16 ein hydraulisches oder pneumatisches Druckmittel einwirkt. Für die Einleitung des Druckmittels in den Druckraum 16 ist ein Druckanschluß 18 vorgesehen. Bei der von dem Arbeitskolben 15 bewirkten Verschiebung des Keilschiebers 10 geben die Wälzkörper 2 die oberen Schenkel 5 teilweise frei, so daß diese und mit ihnen die unteren Schenkel 4 zurückfedern können, wodurch die Bremswirkung aufgehoben wird.

Der Tragkörper 2 wird von einem Blechrahmen 19 umschlossen, der sich an den beiden Seitenflächen befindet und mit zwei Stirnplatten 20 verbunden ist. Der Blechrahmen 19 kann in der Form von dünnen Blechen ausgeführt sein, die mit den Stirnplatten 20 durch eine Schraub- oder Schweißverbindung verbunden sein können. Wie Figur 2 zeigt, sind die Tellerfedern 13 mit ihren von dem Arbeitskolben 15 abgewandten Enden an einer der Stirnplatten 20 abgestützt. Sie drücken den Keilschieber 10 mit den Wälzkörpern 12 an die gegenüber der Längsachse 9 angestellten inneren Oberflächen der oberen Schenkel 5, die zu den Keilflächen 11 des Keilschiebers 10 parallel verlaufen. Über diesen der Anstellung entsprechenden Keilwinkel kann somit eine erhebliche Verstärkung der axialen Federkraft erzielt werden, die dann über die Wälzkörper 12 auf die oberen Schenkel 5 als Druckkraft einwirkt und die oberen Schenkel 5 auseinanderdrückt. Dabei bildet der Steg 3, der sich verbiegt, eine gelenkige Lagerung. In dem Maße, wie die oberen Schenkel 5 auseinandergedrückt werden, werden die unteren Schenkel 4 an die Führungsschiene 1 gepreßt. In diesem Zustand bremst und klemmt das System.

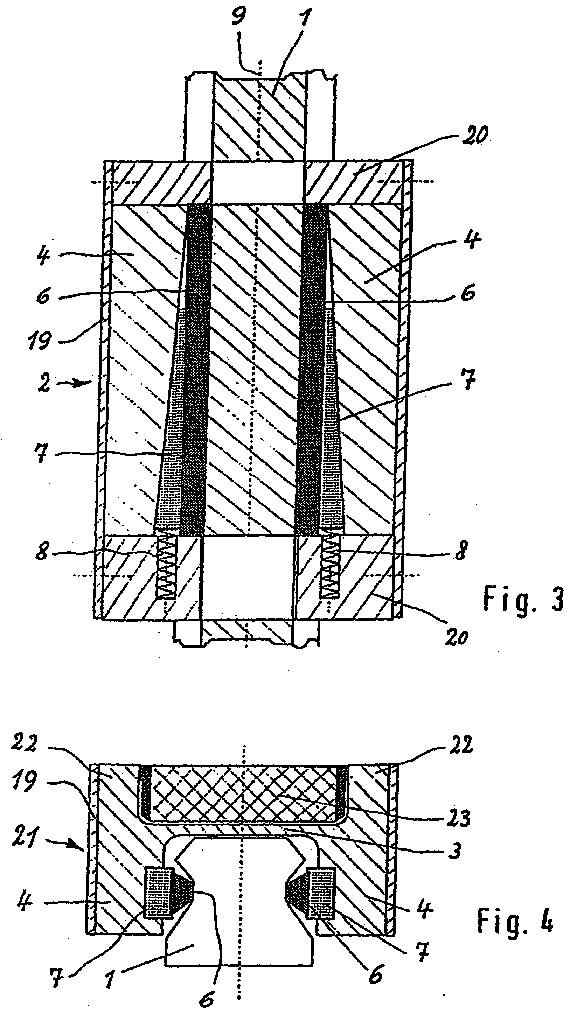

Die in Figur 3 dargestellten Keilstücke 7, auf welche die Druckfedern 8 einwirken, die sich mit ihren Enden an der Stirnplatte 20 abstützen, bilden eine automatische Verschleißnachstellung für die Bremsbacken 6. Diese ist nur aktiv, wenn die Bremsbacken 6 gelüftet, also nicht an die Führungsschiene 1 angedrückt werden. Die das Keilstück 7 berührende Fläche des jeweiligen unteren Schenkels 4 ist ebenfalls keilförmig ausgebildet, beispielsweise angeschliffen.

Die zugehörige Druckfeder 8 drückt das Keilstück 7 in Führungsschienenlängsrichtung an die Keilfläche des unteren Schenkels 4, bis die nun lose zwischen dem Keilstück 7 und der Führungsschiene 1 liegende Bremsbacke 6 dort vollständig anliegt. Beide Bremsbacken 6 liegen somit auch bei geöffneter Bremse leicht an der Führungsschiene 1 an. Die beim Bremsvorgang entstehende Bremskraft wird von den Bremsbacken 6 stirnseitig auf die Stirnplatten 20 übertragen und dort aufgenommen, so daß ein axiales Verschieben der Bremsbacken 6 verhindert wird.

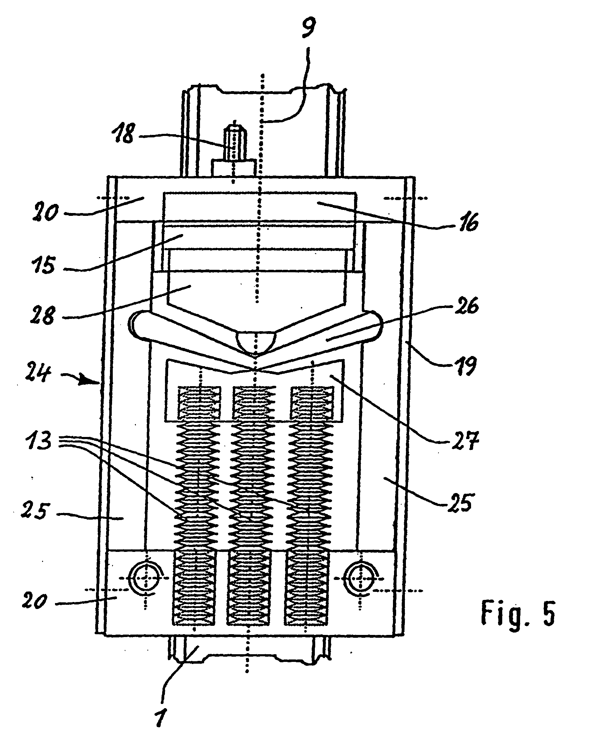

Die in Figur 4 dargestellte Variante der Bremsvorrichtung besteht ebenfalls aus einem H-förmigen Tragkörper 21, bei dem lediglich die oberen Schenkel 22 nicht mehr in Längsrichtung keilförmig ausgebildet sind. Hier entfällt ein interner Energiespeicher, ein Keilschieber und eine mechanische Kraftübersetzung. Die Ansteuerung der Bremsbacken 6 erfolgt elektrisch und wird über einen elektromechanischen Piëzoaktuator realisiert. Dieser Kraftwandler 23 ist zwischen den oberen Schenkeln 22 des Tragkörpers 21 angeordnet, bei Spannungsbeaufschlagung erfolgt seine Volumenvergrößerung. Dadurch werden die oberen Schenkel 22 aufgepreßt und aufgrund der H-Form des Tragkörpers werden die Bremsbacken 6 von den unteren Schenkeln 4 mit einer entsprechenden Klemmkraft an die Führungsschiene 1 gedrückt. Auch diese Variante ist mit der automatischen Verschleißnachstellung mit den Keilstücken 7 ausgestattet.

Auch die Anordnung gemäß Figur 5 basiert auf dem H-förmigen Profil des Tragkörpers 24 mit der automatischen Verschleißnachstellung und dem Blechrahmen 19. Der Tragkörper 24 ist im wesentlichen ebenso aufgebaut, wie der Tragkörper 2 nach den Figuren 1 bis 3 und der Tragkörper 21 nach Figur 4. Diese Ausführung unterscheidet sich aber dadurch, daß eine die oberen Schenkel 25 auseinanderdrückende Kraft von einem Kniehebel 26 aufgebracht wird. Der von den Tellerfedern 13 gebildete Energiespeicher drückt hier auf einen Schieber 27, dem der Kniehebel 26 nachgeschaltet ist. Der Kniehebel 26 kann sowohl einstückig ausgeführt sein als auch aus mehreren Teilen bestehen. Der von den Tellerfedern 13 hervorgerufenen Druckkraft wirkt die Druckkraft des Arbeitskolbens 15 entgegen, der sich in dem Druckraum 16 befindet und von dem pneumatischen oder hydraulischen Druckmittel beaufschlagt wird, welches durch den Druckanschluß 18 in den Druckraum 16 eingeleitet wird.

Wenn die Axialkraft des Energiespeichers über den Schieber 27 auf den zentralen Punkt des Kniehebels 26 einwirkt, so wird diese Kraft aufgrund des flachen Winkels, den die beiden Schenkel des Kniehebels 26 miteinander bilden, verstärkt. Sie wirkt auf die oberen Schenkel 25 des Tragkörpers 24 ein. Bei der Aufweitung der oberen Schenkel 25 verformt sich der Kniehebel 26 in Richtung der einwirkenden Axialkraft des Energiespeichers, was zu einer Veränderung des Schenkelwinkels des Kniehebels 26 führt. Diese ist mit einer zusätzlichen Kraftverstärkung verbunden. Zum Lösen der Bremse wird die von dem Arbeitskolben 15 erzeugte Kraft in entgegengesetzer Längsrichtung der Führungsschiene 1 über ein Druckstück 28 auf den zentralen Punkt des Kniehebels 26 übertragen. Bei dieser von dem Arbeitskolben 15 erzeugten Bewegung verschwenken sich die beiden Schenkel des Kniehebels 26 wieder zueinander, so daß die oberen Schenkel 25 infolge des sie verbindenden elastisch ausgebogenen Steges 3 zurückfedern können. Dadurch bewegen sich die unteren Schenkel 4 von der Führungsschiene 1 fort und die Bremsbacken 6 werden gelöst.

### Bezugszahlenliste

- 1: Führungsschiene
- 2: Tragkörper
- 3: Steg
- 4: unterer Schenkel
- 5: oberer Schenkel
- 6: Bremsbacke
- 7: Keilstück
- 8: Druckfeder
- 9: Längsachse
- 10: Keilschieber
- 11: Keilfläche
- 12: Wälzkörper
- 13: Tellerfeder
- 14: Bohrung
- 15: Arbeitskolben
- 16: Druckraum
- 17: Druckstück
- 18: Druckanschluß
- 19: Blechrahmen
- 20: Stirnplatte
- 21: Tragkörper
- 22: oberer Schenkel
- 23: Kraftwandler
- 24: Tragkörper
- 25: oberer Schenkel
- 26: Kniehebel
- 27: Schieber
- 28: Druckstück

## Patentansprüche

1. Bremsvorrichtung für eine Linearführung mit einem längs einer Führungsschiene (1) verfahrbaren Tragkörper (2), welcher auf die beiden Längsseiten der Führungsschiene (1) einwirkende Bremsbacken (6) enthält, wobei der Tragkörper (2) im Querschnitt H-förmig ausgebildet ist, einen dünnen, elastisch biegsamen Steg (3) und zwei untere Schenkel (4) aufweist, mit welchen er die Führungsschiene (1) umgreift, wobei jeweils zwischen einem unteren Schenkel (4) und der Führungsschiene (1) eine Bremsbacke (6) angeordnet ist, und der Tragkörper (2) mit zwei oberen Schenkeln (5) versehen ist, die gemeinsam mit dem Steg (3) einen Aufnahmeraum bilden, in welchem ein Keilschieber (10) angeordnet ist, der eine gegenüber der Längsrichtung der Führungsschiene (1) geneigte Keilfläche (11) und längs dieser gelagerte Wälzkörper (12) aufweist, über welche er eine Klemmkraft auf die oberen Schenkel (5) und mittelbar auf die Bremsbacken (6) ausübt, wobei er in einer Verschieberichtung von einem Energiespeicher beaufschlagt ist, und mit einem Arbeitskolben (15), der in einem Druckraum (16) des Tragkörpers (2) zur Längsachse (9) der Führungsschiene (1) parallel verschiebbar angeordnet und in der anderen Verschieberichtung des Keilschiebers (10) von einem hydraulischen oder pneumatischen Druckmittel zum Aufheben der Klemmkraft an den Energiespeicher andrückbar ist.

2. Bremsvorrichtung für eine Linearführung mit einem längs einer Führungsschiene (1) verfahrbaren Tragkörper (21), welcher auf die beiden Längsseiten der Führungsschiene (1) einwirkende Bremsbacken (6) enthält, wobei der Tragkörper (21) im Querschnitt H-förmig ausgebildet ist, einen dünnen, elastisch biegsamen Steg (3) und zwei untere Schenkel (4) aufweist, mit welchen er die Führungsschiene (1) umgreift, wobei jeweils zwischen einem unteren Schenkel (4) und der Führungsschiene (1) eine Bremsbacke (6) angeordnet ist, und der Tragkörper (21) mit zwei oberen Schenkeln (22) versehen ist, die gemeinsam mit dem Steg (3) einen Aufnahmeraum bilden, in welchem ein auf die oberen Schenkel (22) einwirkender elektromechanischer Kraftwandler (23) angeordnet ist.

3. Bremsvorrichtung für eine Linearführung mit einem längs einer Führungsschiene (1) verfahrbaren Tragkörper (24), welcher auf die beiden Längsseiten der Führungsschiene (1) einwirkende Bremsbacken (6) enthält, wobei der Tragkörper (24) im Querschnitt H-förmig ausgebildet ist, einen dünnen, elastisch biegsamen Steg (3) und zwei untere Schenkel (4) aufweist, mit welchen er die Führungsschiene (1) umgreift, und jeweils zwischen einem unteren Schenkel (4) und der Führungsschiene (1) eine Bremsbacke (6) angeordnet und der Tragkörper (24) mit zwei oberen Schenkeln (25) versehen ist, die gemeinsam mit dem Steg (3) einen Aufnahmeraum bilden, in welchem ein verstellbarer Kniehebel (26) an den beiden oberen Schenkeln (25) abgestützt angeordnet ist, welcher in einer Verstellrichtung von einem Energiespeicher zur Übertragung einer Klemmkraft auf die Bremsbacken (6) und in der anderen Verstellrichtung von einem Arbeitskolben (15) zur Aufhebung der Klemmkraft an den Bremsbacken (6) beaufschlagt ist, wobei der Arbeitskolben (15) in einem Druckraum (16) des Tragkörpers (24) zur Längsachse (9) der Führungsschiene (1) parallel verschiebbar angeordnet und von einem hydraulischen oder pneumatischen Druckmittel an den Energiespeicher andrückbar ist.

4. Vorrichtung nach Anspruch 1, **dadurch gekennzeichnet, daß** der Keilschieber (10) an seinen beiden Längsseiten mit zwei zur mittleren Längsebene der Führungsschiene (1) symmetrischen geneigten Keilflächen (11) versehen ist, die sich über die Wälzkörper (12) an entsprechend geneigten inneren Oberflächen der oberen Schenkel (5) abstützen.

5. Vorrichtung nach Anspruch 1 oder 3, **dadurch gekennzeichnet, daß** der Energiespeicher als mechanischer Energiespeicher in der Form von Tellerfedern (13) oder Schraubenfedern ausgebildet ist.

6. Vorrichtung nach Anspruch 1 oder 3, **dadurch gekennzeichnet, daß** der Energiespeicher als Gasdruckfeder ausgebildet ist.

7. Vorrichtung nach Anspruch 5 oder 6, **dadurch gekennzeichnet, daß** in dem Keilschieber (10) Bohrungen (14) zur Aufnahme des Energiespeichers angeordnet sind, welche zur Längsachse (9) der Führungsschiene (1) parallel verlaufen.

8. Vorrichtung nach Anspruch 4, **dadurch gekennzeichnet, daß** der Keilschieber (10) und der Arbeitskolben (15) aus einem leichten Werkstoff wie Keramik hergestellt sind.

9. Vorrichtung nach einem der Ansprüche 1 bis 3, **dadurch gekennzeichnet, daß** der H-förmige Tragkörper (2, 21, 24) von einem die Anbindung an einer Anschlußkonstruktion ermöglichenden Blechrahmen (19) umgeben ist.

10. Vorrichtung nach einem der Ansprüche 1 bis 3, **dadurch gekennzeichnet, daß** die inneren Oberflächen der unteren Schenkel (4) jeweils gegenüber der mittleren Längsebene der Führungsschiene (1) geneigt ausgebildet sind, wobei zwischen jeder Bremsbacke (6) und dem benachbarten unteren Schenkel (4) ein Keilstück (7) angeordnet ist, welches in Schienenlängsrichtung von einer Druckfeder (8) beaufschlagt ist.

## Claims

1. A braking device for a linear guide having a carrier body (2) that can travel along a guide rail (1) and is equipped with brake shoes (6) acting on the two side walls of the guide rail (1), wherein the carrier body (2) has an H-shaped cross-section, a thin, elastically flexible web (3) and two lower legs (4) with which it surrounds the guide rail (1), one brake shoe (6) being arranged between each lower leg (4) and the guide rail (1), and the carrier body (2) comprises two upper legs (5) which, together with the web (3), form a reception space in which a wedge slide (10) is arranged that has a wedge surface (11) inclined relative to the longitudinal direction of the guide rail (1) and rolling elements (12) mounted along this wedge surface, through which rolling elements the wedge slide exerts a clamping force on the upper legs (5) and indirectly on the brake shoes (6), the wedge slide being loaded in one direction of displacement by an energy reservoir, the device further comprising a working piston (15) that is arranged for displacement parallel to the longitudinal axis (9) of the guide rail (1) in a pressure chamber (16) of the carrier body (2) and that, in the other direction of displacement of the wedge slide (10), can be pressed against the energy reservoir by a hydraulic or pneumatic pressure medium for neutralising the clamping force.

2. A braking device for a linear guide having a carrier body (21) that can travel along a guide rail (1) and is equipped with brake shoes (6) acting on the two side walls of the guide rail (1), wherein the carrier body (21) has an H-shaped cross-section, a thin, elastically flexible web (3) and two lower legs (4) with which it surrounds the guide rail (1), one brake shoe (6) being arranged between each lower leg (4) and the guide rail (1), and the carrier body (21) comprises two upper legs (22) which, together with the web (3), form a reception space in which an electromechanical force converter (23) acting on the upper legs (22) is arranged.

3. A braking device for a linear guide having a carrier body (24) that can travel along a guide rail (1) and is equipped with brake shoes (6) acting on the two side walls of the guide rail (1), wherein the carrier body (24) has an H-shaped cross-section, a thin, elastically flexible web (3) and two lower legs (4) with which it surrounds the guide rail (1), one brake shoe (6) being arranged between each lower leg (4) and the guide rail (1), and the carrier body (24) comprises two upper legs (25) which, together with the web (3), form a reception space in which an adjustable toggle lever (26) supported on the two upper legs (25) is arranged and loaded in one direction of displacement by an energy reservoir for transmitting a clamping force to the brake shoes (6), and is loaded in the other direction of displacement by a working piston (15) for neutralising the clamping force on the brake shoes (6), which working piston (15) is arranged for displacement parallel to the longitudinal axis (9) of the guide rail (1) in a pressure chamber (16) of the carrier body (24) and can be pressed against the energy reservoir by a hydraulic or pneumatic pressure medium.

4. A device according to Claim 1, **characterised in that,** on its two side walls, the wedge slide (10) has two inclined wedge surfaces (11) symmetric to the central longitudinal plane of the guide rail (1), which wedge surfaces are supported through the rolling elements (12) on correspondingly inclined inner surfaces of the upper legs (5).

5. A device according to Claim 1 or 3, **characterised in that** the energy reservoir is configured as a mechanical energy reservoir in the form of disk springs (13) or coil springs.

6. A device according to Claim 1 or 3, **characterised in that** the energy reservoir is configured as a gas pressure spring.

7. A device according to Claim 5 or 6, **characterised in that** bores (14) for receiving the energy reservoir are arranged in the wedge slide (10) to extend parallel to the longitudinal axis (9) of the guide rail (1).

8. A device according to Claim 4, **characterised in that** the wedge slide (10) and the working piston (15) are made of a light material such as ceramics.

9. A device according to one of the Claims 1 to 3, **characterised in that** the H-shaped carrier body (2, 21, 24) is surrounded by a sheet metal frame (19) that enables connection to an adjoining structure.

10. A device according to one of the Claims 1 to 3, **characterised in that** the inner surfaces of the lower legs (4) are inclined relative to the central longitudinal plane of the guide rail (1), and a wedge member (7) that is loaded in longitudinal direction of the guide rail by a compression spring (8) is arranged between each brake shoe (6) and the adjacent lower leg (4).

## Revendications

1. Dispositif de freinage pour un guide linéaire ayant un corps de support (2) qui est déplaçable le long d'un rail de guidage (1) et qui comprend des mâchoires de frein (6) agissant sur les deux grands côtés du rail de guidage (1), dispositif dans lequel le corps de support (2) a une section droite en forme de H et comprend une mince entretoise (3) élastiquement pliable et deux bras inférieurs (4) par lesquels il entoure le rail de guidage (1), une mâchoire de frein (6) est agencée entre chaque bras inférieur (4) et le rail de guidage (1), le corps de support (2) est muni de deux bras supérieurs (5) qui, conjointement avec l'entretoise (3), forme un logement dans lequel est agencé un coulisseau en clavette (10) qui a une surface de clavette (11) inclinée par rapport à la direction longitudinale du rail de guidage (1), et des corps roulants (12) montés le long de cette surface à travers lesquels le coulisseau en clavette (10) applique un effort de serrage à l'une des mâchoires de frein (6) en étant chargé, lui-même, en l'un des sens de déplacement par un réservoir d'énergie, ledit dispositif comprenant, en outre, un piston moteur (15) qui est agencé pour se déplacer parallèlement à l'axe longitudinal (9) du rail de guidage 81) dans une chambre à pression (16) du corps de support (2) et qui, dans l'autre sens de déplacement du coulisseau en clavette (10), peut être poussé par un milieu hydraulique ou pneumatique sous pression contre le réservoir d'énergie pour neutraliser l'effort de serrage.

2. Dispositif de freinage pour un guide linéaire ayant un corps de support (21) qui est déplaçable le long d'un rail de guidage (1) et qui comprend des mâchoires de frein (6) agissant sur les deux grands côtés du rail de guidage (1), dispositif dans lequel le corps de support (21) a une section droite en forme de H et comprend une mince entretoise (3) élastiquement pliable et deux bras inférieurs (4) par lesquels il entoure le rail de guidage (1), une mâchoire de frein (6) est agencée entre chaque bras inférieur (4) et le rail de guidage (1), et le corps de support (21) est muni de deux bras supérieurs (22) qui, conjointement avec l'entretoise (3), forme un logement dans lequel est agencé un convertisseur de force (23) qui agit sur les bras supérieurs (22).

3. Dispositif de freinage pour un guide linéaire ayant un corps de support (24) qui est déplaçable le long d'un rail de guidage (1) et qui comprend des mâchoires de frein (6) agissant sur les deux grands côtés du rail de guidage (1), dispositif dans lequel le corps de support (24) a une section droite en forme de H et comprend une mince entretoise (3) élastiquement pliable et deux bras inférieurs (4) par lesquels il entoure le rail de guidage (1), une mâchoire de frein (6) est agencée entre chaque bras inférieur (4) et le rail de guidage (1), le corps de support (24) est muni de deux bras supérieurs (25) qui, conjointement avec l'entretoise (3), forme un logement dans lequel est agencé un levier réglable à genouillère (26) qui, en l'un des sens de déplacement est chargé par un réservoir d'énergie pour transmettre un effort de serrage aux mâchoires de frein (6) et qui, dans l'autre sens de déplacement est chargé par un piston moteur (15) pour neutraliser l'effort de serrage qui agit sur les mâchoires de frein (6), ledit piston moteur (15) étant agencé dans une chambre à pression (16) du corps de support (24) pour se déplacer parallèlement à l'axe longitudinal (9) du rail de guidage (1) et qui peut être poussé par un milieu hydraulique ou pneumatique sous pression contre le réservoir d'énergie.

4. Dispositif selon la revendication 1, **caractérisé en ce que** le coulisseau en clavette (10) est muni de ses deux grands côtés de deux surfaces de clavette (11) inclinées et symétriques par rapport au plan longitudinal central du rail de guidage (1), ces surfaces étant supportées par les corps roulants (12) sur des surfaces internes des bras supérieurs (5) qui sont inclinées de façon correspondante.

5. Dispositif selon l'une des revendications 1 et 3, **caractérisé en ce que** le réservoir d'énergie est configuré en tant que réservoir mécanique d'énergie sous la forme de ressorts Belleville (13) ou de ressorts à boudin.

6. Dispositif selon l'une des revendications 1 et 3, **caractérisé en ce que** le réservoir d'énergie est configuré sous la forme d'un ressort à pression de gaz.

7. Dispositif selon l'une des revendications 5 et 6, **caractérisé en ce que** des alésages (14) s'étendant parallèlement à l'axe longitudinal (9) du rail de guidage (1) sont agencés dans le coulisseau en clavette (10) pour loger le réservoir d'énergie.

8. Dispositif selon la revendication 4, **caractérisé en ce que** le coulisseau en clavette (10) et le piston moteur (15) sont fabriqués d'une matière légère telle que la céramique.

9. Dispositif selon l'une des revendications 1 à 3, **caractérisé en ce que** le corps de support (2, 21, 24) en forme de H est entouré d'un cadre en tôle (19) qui permet la liaison à une structure de raccordement.

10. Dispositif selon l'une des revendications 1 à 3, **caractérisé en ce que** les surfaces internes des bras inférieurs (4) sont inclinées par rapport au plan longitudinal central du rail de guidage (1), et, entre chaque mâchoire de frein (6) et le bras inférieur (4) adjacent est agencé un coin (7) qui est chargé en direction longitudinale du rail par un ressort de pression (8).
